# EUROPÄISCHE PATENTSCHRIFT

(11) **EP 0 366 858 B1**
(45) Veröffentlichungstag und Bekanntmachung des Hinweises auf die Patenterteilung: **02.08.1995**
(21) Anmeldenummer: 89108121.8
(22) Anmeldetag: 05.05.1989
(51) Int. Cl.: G06K 19/08

(54) **Strichkodefeld und Strichkodeleser**
Bar code field and bar code reader
Champs de code à barres et lecteurs de code à barres

(30) Priorität: 30.09.1988 CH 3645/88
(43) Veröffentlichungstag der Anmeldung: 09.05.1990
(73) Patentinhaber: Landis & Gyr Technology Innovation AG, 6301 Zug (CH)
(72) Erfinder: Antes, Gregor, Ch-8044 Zürich (CH)
(74) Vertreter: Müller, Hans-Jürgen, Dipl.-Ing.

(56) Entgegenhaltungen:
- EP-A- 0 075 674
- EP-A- 0 105 099
- EP-A- 0 123 750
- FR-A- 2 395 550
- US-A- 4 108 367

## Beschreibung

Die Erfindung bezieht sich auf ein Strichkodefeld gemäss dem Oberbegriff des Anspruchs 1 und auf eine Einrichtung zum Auslesen des Strichkodefeldes.

Ein Strichkodefeld der im Oberbegriff des Anspruchs 1 genannten Art ist beispielsweise aus dem Detailhandel allgemein bekannt. Solche Strichkodefelder eignen sich zur Kennzeichnung von Waren aller Art und enthalten verschlüsselt eine numerische Information in typisch quer zur Längsseite des Strichkodefeldes angeordneten, verschieden breiten Strichelementen. Je nach Anwendung werden verschiedene Strichkodearten verwendet, beispielsweise nach MIL-STD-1189 oder nach dem "European Article Numbering Code"

Als Trägermaterial dient meist Papier, daher werden die Strichelemente im Strichkodefeld mittels eines einfachen Druckverfahrens in einer zum Hintergrund kontrastierenden Farbe auf einen Träger aufgebracht.

Optische Leser sind z. B. aus US-PS 4′743′773 bekannt. Der optischer Leser tastet mittels eines Lichtstrahles das Strichkodefeld in Längsrichtung ab, registriert die Intensitätswerte der reflektierten Strahlung, wandelt diese Werte in elektrische Signale um und gibt diese an ein Auswertegerät ab. Der Strichkode ist selbsttaktend, daher können der Leser und das Auswertegerät die relativen Breiten aufeinanderfolgender Strichelemente auch bei sich stetig ändernder Ablesegeschwindigkeit erkennen. Das Auswertegerät setzt diese Signale mittels eines vorgegebenen Algorithmus in einen für die Weiterverarbeitung geeigneten Kode (z. B. Binärzahl) und ein Taktsignal um.

Die FR-2 490 848 und die US-PS 4′743′744 beschreiben derartige, aus einem optischen Leser und einem Auswertegerät bestehenden Systeme, die einen Strichkode aus dem Strichkodefeld auszulesen vermögen.

Für bestimmte Anwendungen ist die leichte Herstellbarkeit des Strichkodefeldes von grossem Vorteil. Andererseits wären Anwendungen des Strichkodes zur Identifikation von Dokumenten, wie beispielsweise Banknoten, wegen des einfachen und betriebssicheren Ablesens wünschbar. Die leichte Herstellbarkeit verbietet die Anwendung des Strichkodes in diesen Fällen.

Weiter sind maschinenlesbare, schwer kopierbare beugungsoptische Markierungen bekannt. Sie sind als mikroskopische Reliefstrukturen z. B. in eine dünne, auf Papier angebrachte Thermoplastschicht eingeprägt, mit einer optisch wirksamen Schicht versehen und mit einem transparenten Ueberzugmaterial geschützt.

Die Reliefstrukturen weisen z. B. Querschnittsformen bekannter periodischer Funktionen auf mit den für die Beugung von sichtbarem Licht wirksamen Spatialfrequenzen von mehr als 10 Linien pro mm. Herstellungsbedingte Grenzen beschränken den praktisch nutzbaren Bereich auf etwa 2500 Linien/mm. Aber auch Querschnittsformen mit aperiodischen Funktionen, die lokal Spatialfrequenzen aus diesem Bereich enthalten, wie z. B. Mattstrukturen, sind anwendbar. Der Höhenunterschied dieser Reliefstrukturen ist typisch zwischen 50 nm und 10′000 nm gewählt.

Aehnliche Reliefstrukturen beugen auffallendes Licht und enthalten Echtheitsinformationen beispielsweise in Form von Bildern, deren Farben und Leuchtkraft vom Betrachtungswinkel oder deren Bewegungseffekte von der Aenderung des Betrachtungswinkels abhängen.

Derartige Dokumente und Verfahren zu deren Herstellung beschreiben die CH-PS 594 936 und die EP-B 330 738.

Aus der EP-A-105 099 ist ein Sicherheitselement mit einem beugungsoptischen Muster bekannt, dessen Erscheinungsbild sich in Farbe und/oder Bildinhalt durch Drehen um eine vorbestimmte Achse verändert und dem Betrachter eine kennzeichnende Bewegung des Musters vortäuscht.

Eine Wertkarte weist gemäß US-A-4 108 367 eine Spur aus nebeneinanderliegenden und flächengleichen Markierungen mittels identischen Paaren von Fraunhofer-Hologrammen auf. Jedes Hologrammpaar der Spur entspricht einer Werteinheit, die beim Entwerten zerstört wird.

Die FR-A-2 395 550 zeigt eine Wertkarte mit zwei getrennten parallelen Spuren, wovon die eine Markierungen für die Information enthält und die andere die Markierungen zum Erzeugen eines Taktsignals, das zum Auslesen der Information unabdingbar ist. Alle Markierungsfelder einer Spur weisen die gleiche Breite auf.

Der in der EP-A-075 674 beschriebene Gegenstand ist eine Ausweiskarte mit einem Feld aus verschieden gestalteten beugungsoptischen Elementen, die integral mit Licht beleuchtbar und gleichzeitig auslesbar sind, wobei der Leser das Vorhandensein aller bzw. das Fehlen vorbestimmter Teilmerkmale des Felds feststellen und mit einem internen Muster vergleichen kann.

Der Erfindung liegt die Aufgabe zugrunde, ein Strichkodefeld zu schaffen, das schwer kopierbar ist und sich zur Kennzeichnung von Dokumenten, Banknoten und anderen Wertpapieren eignet.

Die Erfindung ist im Anspruch 1 gekennzeichnet. Eine Einrichtung zum Auslesen des Strichkodefeldes ist in Anspruch 14 angegeben. Vorteilhafte Ausgestaltungen ergeben sich aus den Unteransprüchen.

Nachfolgend werden Ausführungsbeispiele der Erfindung anhand der Figuren näher erläutert.

Es zeigt:
- Fig. 1: eine Ausführung eines Strichkodefeldes mit Beugungselementen,
- Fig. 2: eine Anordnung von Lichtstrahlen beim Auslesen,
- Fig. 3: ein Anordnung der Lichtstrahlen beim Beleuchten von Reliefstrukturen mit verschiedenen Azimutwinkeln,
- Fig. 4: eine Einrichtung zum Auslesen des Strichkodefeldes mit Reliefstrukturen,
- Fig. 5: eine Ausführung des Lesers mit einem rotationssymmetrischen Aufbau und
- Fig. 6: eine Ausführung des Strichkodefeldes mit einem zusätzlichen Strichkode.

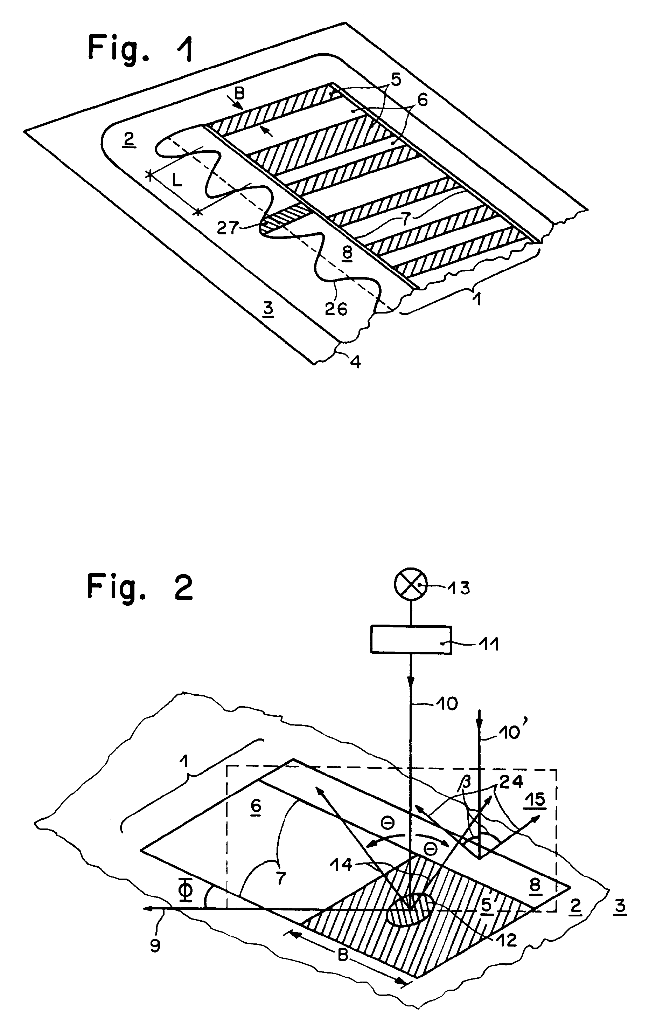

In der Figur 1 sind ein Strichkodefeld 1, ein Träger 2 und ein Gegenstand 3, der mit dem Strichkodefeld 1 gekennzeichnet ist, auf der einen Seite durch einen Schnitt 4 begrenzt. Der Träger 2 ist beispielsweise als Selbstklebe-Etikett ausgebildet und mit dem Gegenstand 3 derart fest verbunden, dass das Strichkodefeld 1 bei einem Ablöseversuch zerstört wird. In einer anderen Ausführung ist der Träger 2 eine dünne auf Papier aufgebrachte thermoplastische Farbschicht oder eine im Heissprägeverfahren transferierte Folie, wie aus der CH-PS 594 936 bekannt ist.

Das Strichkodefeld 1 besteht aus einer Anzahl kodierter Zeichen, die ihrerseits aus einer vorbestimmten Anzahl rechteckförmiger Strichelemente 5 und Hintergrundelemente 6 aufgebaut sind, die in der Ableserichtung verschiedene Breiten B aufweisen.

Das Strichkodefeld 1 ist daher in mindestens zwei Teilflächengruppen eingeteilt. Die Strichelemente 5 der ersten Teilflächengruppe sind in den Figuren zur Verdeutlichung schraffiert. Zwei benachbarte Strichelemente 5 sind jeweils wenigstens durch ein Hintergrundelement 6 getrennt. Die Hintergrundelemente 6 bilden mit der zweiten Teilflächengruppe den Hintergrund, vor dem die Strichelemente 5 des Strichkodefeldes 1 erkennbar sind.

Ist wenigstens eine weitere Teilflächengruppe vorhanden, deren Teilflächen sich mit den Elementen 5, 6 in der Reihenfolge im Strichkodefeld 1 abwechseln, bewirkt dies eine Erhöhung der Kodiermöglichkeiten.

Zusätzlich kann auf wenigstens einer in der Figur 1 mit einer zeichnerisch bedingten Doppellinie dargestellten Längsseite 7 des Strichkodefeldes 1 eine Seitenberandungsfläche 8 das Strichkodefeld 1 begrenzen.

In jede Teilflächengruppe sowie in die allfällig vorhandenen Seitenberandungsflächen 8 sind mikroskopische, vorbestimmte Reliefstrukturen eingeprägt, beipielsweise mittels der in der CH-PS 664 030 beschriebenen Methode.

Die periodischen Reliefstrukturen weisen als wichtigste, das Beugungsverhalten bestimmende Parameter die Form und die Abmessungen des Reliefprofils, die Spatialfrequenz f und einen Azimutwinkel Φ auf.

Der Azimutwinkel Φ (Figur 2) bestimmt die Orientierung der Reliefstruktur in bezug auf das Strichkodefeld 1 und bildet den Winkel zwischen der Längsseite 7 des Strichkodefeldes 1 und einer Richtung 9 des Gittervektors.

Der im Detailhandel bekannte, mit Farbe gedruckte Strichkode nutzt die Unterschiede in der Absorption des Ausleselichtes als einzigen Parameter aus. Im Gegensatz zu dieser binären Aufzeichnung weisen die Strichkode mit geprägten Reliefstrukturen bis zu drei voneinander unabhängige Parameter auf, d. h. sogar eine oktale Aufzeichnung ist denkbar. Die grössere Anzahl von Parametern zum Unterscheiden der Reliefstrukturen ermöglicht, im gleichen Strichkodefeld 1 beispielsweise eine zusätzliche Sicherheitsinformation einzubauen.

Jeder der drei Parameter zur Identifikation der Reliefstruktur alleine sowie deren Kombinationen lassen sich zum Aufbau einer Kodierung im Strichkodefeld 1 verwenden, wobei neben den hier vorgestellten Ausführungen ein Fachmann leicht weitere Arten ableiten kann.

Insbesondere sind überlagerte Reliefstrukturen mit wenigstens zwei verschiedenen Spatialfrequenzen f_{A} und f_{B} sowie unterschiedlicher Form und Abmessungen verwendbar, wobei beispielsweise f_{A} im Bereich von 10 bis 200 Linien pro mm und f_{B} im Bereich von 50 bis 2500 Linien pro mm liegen.

Die in den Figuren gezeichnete Berandung der verschiedenen Reliefstrukturen des Strichkodefeldes 1 sind nur durch die zeichnerische Darstellung bedingt, da sich die Flächen 5, 6, 8 nur in den Parametern der eingeprägten Reliefstrukturen unterscheiden.

Zum Auslesen der in den Reliefstruktur verborgenen Informationen wird ein optischer Leser verwendet, der manuell frei über das Strichkodefeld 1 führbar ist oder der mittels einer hier nicht gezeigten Transporteinrichtung für die Gegenstände 3 ausgestattet ist. Der Leser erzeugt einen Ausleselichtstrahl 10 mit Licht aus dem sichtbaren oder dem infraroten Teil des Spektrums.

Die Reliefstrukturen sind in Transmission oder in Reflexion auslesbar, wobei gemäss der CH-PS 594 936 eine optisch aktive Zwischenschicht, das Material des Trägers 2 und der Gegenstand 3 die vorteilhafte Art der Auslesung bestimmen.

Beim Auslesen der Information in Reflexion ist wenigstens das Ueberzugmaterial des Strichkodefeldes 1 für den Ausleselichtstrahl 10 transparent.

Beim Auslesen der Information in Transmission müssen der Träger 2 und das Ueberzugmaterial des Strichkodefeldes 1 für den Ausleselichtstrahl 10 transparent sein, wobei die Oberfäche der mikroskopischen Reliefstruktur eine Grenzfläche zwischen zwei Materialien ist, die einen unterscheidbaren Brechungsindex aufweisen. Der Gegenstand 3 besitzt im Bereich des Strichkodefeldes 1 eine Aussparung oder ist für den Ausleselichtstrahl 10 ebenfalls transparent.

Die Reliefstrukturen der Teilflächengruppen und der Seitenberandungsflächen 8 modifizieren das auf sie einfallende Umgebungslicht. Entsprechend der vorbestimmten Transparenz des Ueberzugmaterials ist der Strichkode visuell im Umgebungslicht sichtbar oder bleibt dem unbewaffneten Auge ganz verborgen. Für eine maschinelle Auslesung genügt eine optische Durchlässigkeit des Ueberzugs im Wellenlängenbereich des Ausleselichts. Beispielsweise dient eine auf dem Ueberzugmaterial aufgedruckte, visuell sichtbare Markierung des Strichkodefeldes 1 vorteilhaft der Lokalisierung des Strichkodefeldes 1, da bei einer manuellen Führung des optischen Lesers das Strichkodefeld 1 leicht lokalisierbar und die Information parallel zu den Längsseiten 7 auslesbar ist.

Der Leser weist eine optische Einrichtung 11 auf, die den Ausleselichtstrahl 10 formt. Eine beleuchtete Reliefstruktur 12 des Strichkodefeldes 1 besitzt daher eine vorbestimmte Form, beispielsweise ein Kreis, ein Rechteck oder eine Ellipse, deren Abmessung in der Leserichtung, d. h. parallel zur Längsseite 7, kleiner als die geringste Breite B der Elemente 5, 6 bemessen ist. Für einen manuell geführten Leser ist die Form vorzugsweise ein Kreis, um die Anforderungen an ein parallel zur Längsrichtung 7 ausgerichtetes Ablesen zu vermindern. Wird hingegen mittels der Transporteinrichtung der Gegenstand 3 parallel zur Längsrichtung 7 dem Leser zugeführt, ist die Rechteckform vorteilhaft.

Für eine maschinelle Erkennung ist der Ausleselichtstrahl 10 zur Unterscheidung verschiedener Beugungsstrukturen vorteilhaft einfarbig. Er wird beispielsweise mittels eines preisgünstigen Halbleiterlasers erzeugt, der als eine Lichtquelle 13 eingesetzt ist.

Der Leser führt den Ausleselichtstrahl 10 von Anfang bis Ende über das Strichkodefeld 1 parallel zur Längsseite 7, wobei abwechselnd eines der Elemente 5, 6 beleuchtet wird. Jede Reliefstruktur beider Teilflächengruppen beugt den vorzugsweise senkrecht auf das Strichkodefeld 1 einfallenden Ausleselichtstrahl 10 in vorbestimmter Weise, die durch die jeweils beleuchtete Reliefstruktur 12 vorgegeben ist.

Die beleuchtete Reliefstruktur 12 beugt das Ausleselicht um einen von der Wellenlänge des Ausleselichtes und der Spatialfrequenz f abhängigen Beugungswinkel ϑ. Licht 14 ist unter dem Beugungswinkel ϑ in zwei zum senkrecht einfallenden Ausleselichtstrahl 10 symmetrischen Richtungen (ϑ, Φ) und (ϑ, Φ+180°) gebeugt, wobei im Fall des senkrecht einfallenden Ausleselichtstrahls 10 das gebeugte Licht 14 und der Ausleselichtstrahl 10 eine Ebene 15 definieren, die auch die Richtung 9 der beleuchteten Reliefstruktur 12 enthält. Die Längsseite 7 schliesst mit der Ebene 15 daher auch den Azimutwinkel Φ ein.

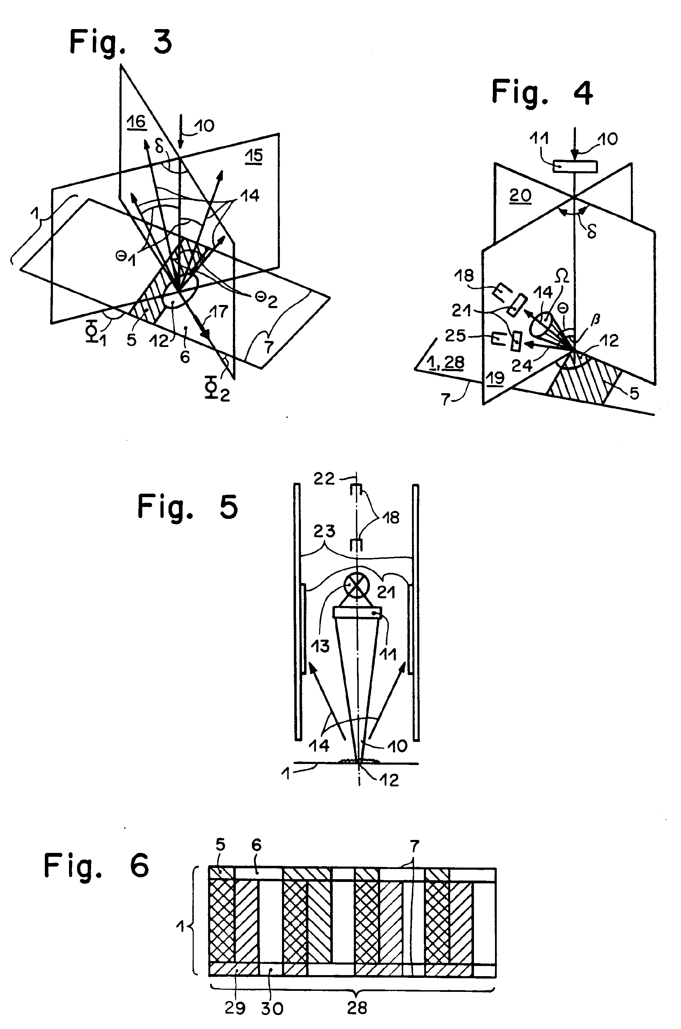

Die Reliefstrukturen des Strichkodefelds 1 (Figur 3) weisen beispielsweise für jedes Strichelement 5 den gleichen, vorbestimmten Azimutwinkel Φ₁ auf. Er unterscheidet sich vom vorbestimmten, allen Hintergrundelementen 6 gemeinsamen Azimutwinkel Φ₂ um die Differenz δ. Beim Verschieben des senkrecht einfallenden Ausleselichtstrahls 10 parallel zur Längsseite 7 von einem Strichelement 5 auf ein Hintergrundelement 6 verringert sich entsprechend dem beleuchteten Flächenanteil des Strichelementes 5 die Intensität des in die Richtungen (ϑ₁, Φ₁) und (ϑ₁, Φ₁+180°) gebeugten Lichtes 14 in der Ebene 15, während die Intensität entsprechend dem beleuchteten Flächenanteil des Hintergrundelementes 6 von in eine Richtung (ϑ₂, Φ₂) und (ϑ₂, Φ₂+180°) gebeugten Lichtes 14 in einer neuen Ebene 16 ansteigt. Die Orientierung der Ebene 16 ist durch eine Richtung 17 des Strukturvektors der Hintergrundelemente 6 und den Ausleselichtstrahl 10 definiert. Die beiden Ebenen 15, 16 schliessen daher auch den Winkel δ ein. Sobald der Ausleselichtstrahl 10 nur noch das Hintergrundelement 6 beleuchtet, ist das gebeugte Licht 14 nur noch in der Ebene 16 nachweisbar.

Enthält das Strichkodefeld 1 weitere Teilflächengruppen mit anderen Orientierungen des Reliefprofils, so legen diese zusätzliche Beugungsebenen mit einem anderen vorbestimmten Winkel δ zur Ebene 15 fest.

Weist das Reliefprofil eine symmetrische Form auf, so sind die Intensitäten des gebeugten Lichtes 14 symmetrisch zum senkrecht auf die Reliefstruktur 12 einfallenden Ausleselichtstrahl 10 in der Ebene 15, 16 verteilt.

Weist das Reliefprofil hingegen eine asymmetrische Form auf, so ist die Intensität des gebeugten Lichts 14 entsprechend der Asymmetrie in einer vorbestimmten Richtung grösser als in der anderen.

Der Leser enthält wenigstens einen Photosensor 18 (Figur 4). Das in den Photosensor 18 fallende, an der beleuchteten Reliefstruktur 12 gebeugte Licht 14 und der Ausleselichtstrahl 10 schliessen den Beugungswinkel ϑ ein und bestimmen eine Ausleseebene 19. Vorteilhaft sind zwei Photosensoren 18 als Paar symmetrisch zum Ausleselichtstrahl 10 unter dem Winkel ϑ in der Ausleseebene 19 angeordnet. Dies ermöglicht die Symmetrie bzw. die Asymmetrie der Reliefstruktur 12 festzustellen.

Weist das Reliefprofil eine asymmetrische Form auf, messen die beiden Photosensoren 18 eines Paares vorteilhaft die Intensitätsdifferenz zwischen dem in der Richtung (ϑ, Φ) und dem in der Richtung (ϑ, Φ + 180°) gebeugten Licht 14, beispielsweise um Fremdlichteffekte zu vermindern.

Vorteilhaft weist das Strichkodefeld 1 ein Reliefprofil mit einer asymmetrischen Form auf und ist Teil einer graphischen Darstellung, die mit den Parametern Spatialfrequenz f und Azimutwinkel Φ der Reliefstruktur gestaltet ist. Der dem Bild überlagerte Strichkode mit den Elementen 5, 6 bestimmt für diese beiden Teilflächengruppen die Asymmetrie des Reliefprofils.

Es ist auch möglich, dass der Leser wenigstens eine zusätzliche Ausleseebene 20 zum Registrieren des in diese Ausleseebene 20 durch eine andere Reliefstrukur gebeugten Lichtes 14 aufweist. Besitzen diese Reliefstrukturen eine Azimutwinkeldifferenz δ, so schliessen die Ausleseebenen 19, 20 vorteilhaft auch den Differenzwinkel δ ein.

Beim Ablesen des Strichkodes muss der Ausleselichtstrahl 10 senkrecht auf die Ebene des Trägers 2 einfallen, während die von den Photosensoren 18 definierten Ausleseebenen 19, 20 mit den mittels des Beugungsvorganges definierten Ebenen 15, 16 (Figur 3) zusammenfallen müssen. Zusätzliche Abweichungen von diesen Bedingungen sind bei einem dünnen Träger 2 auf einem nicht planen Gegenstand 3 zu erwarten, beispielsweise bei einer zerknitterten Banknote. Hier weicht der Ausleselichtstrahl 10 von einem Flächenelement des Trägers 2 zum andern in unterschiedlicher, nicht vorbestimmter Weise von der Senkrechten zum Flächenelement ab.

Die Photodetektoren 18 (Figur 4) des Lesers weisen vorteilhaft einen grossen Akzeptanzwinkel auf und registieren alles in einen Raumwinkel Ω gebeugte Licht 14. Dies ist mittels eines Photosensors 18 mit einer grossen lichtempfindlichen Fläche oder mittels eines dem Photosensor 18 vorgeschalteten optischen Mittels 21 erreichbar, das das gebeugte Licht 14 auf den punktförmigen Photosensor 18 konzentriert.

Ein Linsen- oder Spiegelsystem oder ein beugungsoptisches, fokussierendes Element ist für das optische Mittel 21 und für die optische Einrichtung 11 verwendbar. Das beugungsoptische Element weist eine Reliefstruktur ähnlich einem Beugungsgitter auf, vermag aber wegen der Form und der Abmessungen der Reliefstruktur unter einem vorbestimmten Winkel einfallendes Licht in einen vorbestimmten Brennpunkt zu fokussieren. Derartige beugungsoptische Elemente sind in Transmission und Reflexion bekannt, wie z. B. holographische optische Elemente (HOE's).

In einer anderen Ausführung des Strichkodefeldes 1 unterscheiden sich die Elemente 5, 6 dadurch, dass nur eine der beiden Teilflächengruppen eine periodische Reliefstruktur aufweist, z. B. die Strichelemente 5, während die Hintergrundelemente 6 mit einer Mattstruktur geprägt sind.

Als Reliefstukturen sind beispielsweise einfache, geradlinige Beugungsgitter ("Gitter") mit symmetrischen oder asymmetrischem Reliefprofil vorteilhaft, jedoch sind auch andere Reliefstrukturen anwendbar, wobei deren Form nur durch die Prägetechnik beschränkt ist.

Insbesondere können auch unidirektionale Mattstrukturen verwendet werden. Das sind Gitterstrukturen, deren Gitterkonstante von Ort zu Ort statistisch variieren, wobei sich die Elemente 5, 6 durch das Azimut der Reliefstruktur unterscheiden.

Beispielsweise unterscheiden sich die Parameter der Gitter der Elemente 5, 6 der N verschiedenen Teilflächengruppen nur in ihren N Spatialfrequenzen f₁, f₂ usw. und weisen alle den gleichen Azimutwinkel Φ auf. Das von den Elementen 5, 6 usw. gebeugte Licht 14 erscheint dann unter den N Beugungwinkeln ϑ₁, ϑ₂ usw. entsprechend der Anzahl N der Teilflächengruppen. Die Photosensoren 18 des Lesers für ein solches Strichkodefeld 1 besitzen den grösstmöglichen Akzeptanzwinkel, wobei der Bereich im Azimutwinkel volle 360° beträgt und der Bereich des Beugungswinkel ϑ in N Winkelbereiche eingeteilt ist.

Gemäss der Figur 5 weist der Leser vorteilhaft einen rotationssymmetrischen Aufbau auf und ist beispielsweise in einen Hohlzylinder 23 eingebaut, auf dessen Achse 22 die Beleuchtungsquelle 13 mit der optischen Einrichtung 11 derart angeordnet ist, dass der Ausleselichtstrahl 10 in einer Richtung längs der Achse 22 auf die ausserhalb des Hohlzylinders 23 gelegene beleuchtete Reliefstruktur 12 des Strichkodefeldes 1 geworfen wird. Eine hier nicht gezeigte Distanziervorrichtung führt den Leser in einem vorbestimmten Abstand so über das Strichkodefeld 1, dass die optische Achse 22 angenähert senkrecht zur mittleren Ebene des Strichkodefeldes 1 steht. Das gebeugte Licht 14 fällt auf die ringsum an der Innenwand des Hohlzylinders 23 angebrachten optischen Mittel 21. Sie reflektieren das unter den Beugungswinkeln ϑ₁, ϑ₂ usw. gebeugte Licht 14 fokussierend auf einen der N Photosensoren 18, die hinter der Beleuchtungsquelle 13 in einem der N Beugungswinkeln ϑ₁, ϑ₂ usw. entsprechenden Brennpunkte auf der Achse 22 angeordnet sind. Dieser Leser weist keine azimutal ausgezeichnete Richtung auf und eignet sich für eine manuelle Führung.

Es ist möglich, dass sich die Parameter der Gitter der Elemente 5, 6 usw. der Teilflächengruppen nur in bezug auf den Wert ihres Azimutwinkels Φ unterscheiden. Beispielsweise weist ein solches Strichkodefeld 1 zwei Teilflächengruppen auf. Die Differenz δ zwischen dem Azimutwinkel Φ der beiden Gitter beträgt δ = 90°, wobei beispielsweise der Azimutwinkel Φ für die Gitter der Strichelemente 5 einen Wert von Φ₁= +45° aufweist und für die Gitter der Hintergrundelemente 6 einen Wert von Φ₂= -45°. Der für dieses Strichkodefeld 1 geeignete Leser (Figur 4) weist als Akzeptanzwinkel für jeden Photosensor 18 in der Ausleseebene 19, 20 einen Bereich zwischen 20° bis 80° für den Winkel ϑ und für den Azimutwinkel Φ einen Bereich von ± 40° auf und eignet sich ebenfalls auch für eine manuelle Führung.

Vorteilhaft weisen die Reliefstrukturen der Elemente 5, 6 keine konstante Spatialfrequenzen f₁, f₂ auf, sondern sind mit einer vorbestimmten Spatialfrequenzamplitude A moduliert, wobei die Amplitude A kleiner als die halbe Differenz benachbarter Spatialfrequenzen f₁, f₂ ist. In der beleuchteten Reliefstruktur 12 sind daher alle Spatialfrequenzen aus einem Bereich f± A wirksam. Dies bewirkt eine vorbestimmte Auffächerung des gebeugten Lichtes 14 in der Ebene 15, 16 und erhöht die Ablesesicherheit bei nicht ganz ebenen Trägern 2 bzw. bei nicht genau senkrecht einfallendem Ausleselichtstrahl 10.

Das Strichkodefeld 1 (Figur 2) kann wenigstens auf der einen Längsseite 7 die Seitenberandungsfläche 8 aufweisen. Beispielsweise kann in die Seitenberandungsfläche 8 ein Gitter mit den gleichen Parametern wie das Gitter der Hintergrundelemente 6 eingeprägt sein. Das Gitter der Seitenberandungsfläche 8 kann sich aber auch von den beiden Reliefstrukturen der Elemente 5, 6 unterscheiden.

Die beiden Gitter der Seitenberandungsflächen 8 können eine Spatialfrequenz f_{S} aufweisen und sich in den beiden Azimutwinkeln Φ_{S} um die Differenz α unterscheiden Die Gitter der Elemente 5, 6 sind durch die Spatialfrequenz f und die Azimutwinkel Φ₁, Φ₂ vorbestimmt. Vorteilhaft weisen die Azimutwinkel Φ_{S} die gleichen Werte wie die Azimutwinkel Φ₁, Φ₂ der Elemente 5, 6 auf, damit der Leser in der azimutalen Ausrichtung nicht eingeschränkt wird.

Ein Teil 10′ (Figur 2) des rechteckförmigen Ausleselichtstrahls 10 beleuchtet auch die Seitenberandungsflächen 8. Licht wird als Strahlen 24 unter einem vom Winkel ϑ verschiedenen Winkel β in eine dem Azimutwinkel Φ_{G} zugeordnete, zur Ebene 15 parallelen Ebene gebeugt.

Ein Leser für diese Ausführung des Strichkodefeldes 1 (Figur 4) besitzt in jeder Ausleseebene 19, 20 vorteilhaft zwei symmetrisch zum Ausleselichtstrahl 10 angeordnete Paare von Photosensoren 18, 25, wobei die Photosensoren 18 das unter einem Winkel ϑ gebeugte Licht 14 registrieren und die Photosensoren 25 die unter einem Winkel β gebeugten Strahlen 24 empfangen.

Beispielsweise beschränkt das optische Mittel 21 der Photosensoren 18 den nutzbaren Raumwinkel Ω des gebeugten Lichtes 14 auf einen Bereich des Beugungswinkels ϑ zwischen 20° und 45°, während das optische Mittel 21 der Photosensoren 25 die Strahlen 24 im Bereich des Winkels β von 46° bis 80° akzeptiert.

Es ist auch möglich, dass das Strichkodefeld 1 (Figuren 1 und 2) mit wenigstens einer Seitenberandungsfläche 8 versehen ist, deren eine Längsberandung 26 auf einer von den Elementen 5, 6 abgewandten Seite eine vorbestimmte Form aufweist, wobei die Längsberandung 26 vorteilhaft als Sinus-, Rechteck-, Sägezahn- oder eine andere periodische Wellenfunktion mit einer vorbestimmten Wellenlänge L ausgestaltet ist. Die Intensität der Strahlen 24 ändert sich daher entsprechend einem beleuchteten variablen Flächenanteil 27 der Seitenberandungsfläche 8.

Vorteilhaft ist die Wellenlänge L eine stetige und monotone Funktion und hängt in vorbestimmter Weise vom Ort auf der Längsberandung 26 ab. Die momentane Position des Ausleselichtstrahls 10 im Strichkodefeld 1 ist durch eine ständige Ermittlung der Wellenlänge L aus der Intensität der Strahlen 24 bestimmbar.

Sind zwei Seitenberandungsflächen 8 vorhanden, können sich die Wellenlängen L der beiden Längsberandungen 26 unterscheiden.

Die Photosensoren 25 wandeln die Intensität der Strahlen 24 (Figur 4) in elektrische Signale um, wodurch beispielsweise die Wellenfunktionen der Längsberandung 26 bestimmt und die Orte von Extremwerten der Wellenfunktion mit der Lage der kodierten Zeichen des Strichkodefeldes 1 verglichen werden können. Die Unversehrtheit des Strichkodefeldes 1 ist daher überprüfbar und jede der beiden Seitenberandungsflächen 8 erfüllt eine Sicherheitsfunktion.

Bei dem in der Figur 6 dargestellten Strichkodefeld 1 mit einer Sicherheitsfunktion ist dem Strichkode ein zweiter Strichkode 28 überlagert. Der Strichkode 28 ist aus Strichflächen 29 und Neutralflächen 30 aufgebaut und teilt das Strichkodefeld 1 längsweise in aufeinanderfolgende Felder ein, denen durch den Strichkode 28 eine vorbestimmte Ziffer zugeordnet ist. Diese Ziffern des Strichkodes 28 stellen beispielsweise Zahlen zum Numerieren der aufeinanderfolgenden Felder im Strichkodefeld 1. Der Strichkode aus den Elementen 5, 6 und der Strichkode 28 können auch nach zwei verschiedenen Normen kodiert sein.

In der Zeichnung sind die verschiedenen Reliefstrukturen mittels zusammengesetzter Schraffuren dargestellt, wobei aus zeichnerischen Gründen der Strichkode 28 gegenüber den Elementen 5, 6 des Strichkodefeldes 1 seitlich verschoben ist.

Diese doppelte Kodierung bedingt kompliziertere Reliefstrukturen im Strichkodefeld 1. Sie sind durch wenigstens zwei Parameter vorbestimmt, wobei ein erster Parameter, z. B. die Spatialfrequenz f, den Elementen 5, 6 und ein zweiter Parameter, z. B. der Azimutwinkel Φ, den Flächen 29, 30 zugeordnet ist.

Beispielsweise weist die Reliefstruktur des Strichelementes 5 die Spatialfrequenz f₁ und die des Hintergrundelementes 6 die Spatialfrequenz f₂ auf, wobei entsprechend der Zugehörigkeit zur Strichfläche 29 oder zur Neutralfläche 30 die Orientierung der Reliefstruktur durch den Azimutwinkel Φ₁ oder Φ₂ vorbestimmt ist.

In der Figur 4 empfängt der Leser das gebeugte Licht 14 mit den Photosensoren 18, 25 in jeder der beiden Ausleseebenen 19, 20 in z. B. zwei Bereichen des Azimutwinkels Φ und zwei Bereichen des Beugungswinkels ϑ. Im obigen Beispiel enthalten die Signale der beiden Photosensoren 18, 25 der Ausleseebene 19 oder 20 die Information des Strichkodes 28, während aus den Signalen der Photosensoren 18 oder 25 beider Ausleseebenen 19, 20 die Information der Elementen 5 oder 6 gewonnen wird.

Vorteilhaft eignen sich in dieser Ausführung asymmetrische Reliefprofile für das Strichkodefeld 1. Die Reliefprofile der Elemente 5 und 6 unterscheiden sich beispielsweise in der Spatialfrequenz f und sind in den Strichflächen 29 in bezug auf ihre Asymmetrie spiegelbildlich zu denen in den Neutralflächen 30 angeordnet. Die Grenzen der Flächen 29, 30 und die der Elemente 5, 6 müssen in der Richtung der Längsseite 7 nicht zusammenfallen. Die Elemente 5, 6 weisen daher in vorbestimmter Weise Flächenteile mit beiden Asymmetrien auf.

Ein Leser für diese Ausführung des doppelt kodierten Strichkode feldes 1 ist mit einem nutzbaren Bereich von ± 40° für den Azimutwinkel Φ in der azimutalen Ausrichtung kaum eingeschränkt und weist in einer Ausleseebene 19 bzw. 20 zwei Paare von Photosensoren 18, 25 auf. Beim Auslesen der Information des Strichkodefeldes 1 sind die Summen der Ausgangssignale jedes Paares von Photosensoren 18, 25 auszuwerten. Die Information des Strichkodes 28 ist in der Differenz der Ausgangssignale jedes Paares von Photosensoren 18, 25 enthalten.

Beim Auswerten der Signale des Lesers überprüft beispielsweise eine hier nicht gezeigte Auswerteelektronik die Reihenfolge der durch den Strichkode 28 numerierten Flächen des Strichkodefeldes 1 und vergleicht die dekodierte Reihenfolge mit der vorbestimmten.

Weist die gelesene Informationen nach dem Dekodieren in der hier nicht gezeigten Auswerteelektronik z. B. nicht eine durch die Norm vorbestimmte asymmetrische Gliederung auf, überprüft die Auswerteelektronik, ob das Strichkodefeld 1 rückwärts gelesen worden ist, und setzt eine als rückwärts gelesene Information selbständig richtig um.

Das Strichkodefeld 1 mit einer Sicherheitsfunktion ist vorteilhaft für Wertdokumente verwendbar, da es die Funktion eines Echtheitsmerkmals aufweist und zur Klassifikation der Wertdokumente Informationen z. B. über den Wert, die Herkunft und die Serienummer enthält.

## Patentansprüche

1. Strichkodefeld mit Strichelementen (5) und Hintergrundelementen (6) unterschiedlicher Breite B, die eine maschinenlesbare kodierte Information darstellen, zum Auslesen mittels eines Ausleselichtstrahls (10), dessen Abmessung in der Leserichtung kleiner ist als die geringste Breite B,
**dadurch gekennzeichnet,**
daß wenigstens die Strichelemente (5) eine eingeprägte optisch wirksame mikroskopische periodische Reliefstruktur mit demselben Azimutwinkel φ₁ und gleicher Orientierung in jedem Strichelement (5) bei einer Spatialfrequenz f von mehr als 10 Linien pro mm aufweist.

2. Strichkodefeld nach Anspruch 1,
**dadurch gekennzeichnet,** daß die Hintergrundelemente eine optisch wirksame mikroskopische Reliefstruktur ausweisen und daß alle Reliefstrukturen der Hintergrundelemente (6) einen gleichen, um einen vorbestimmten Winkelbetrag (δ) vom ersten Azimutwinkel (φ₁) sich unterscheitenden zweiten Azimutwinkel (φ₂) aufweisen.

3. Strichkodefeld nach Anspruch 1 oder 2,
**dadurch gekennzeichnet,**
daß sich die Reliefstrukturen der Strichelemente (5) und der Hintergrundelemente (6) durch eine Asymmetrie des Reliefprofils unterscheiden.

4. Strichkodefeld nach einem der vorherigen Ansprüche,
**dadurch gekennzeichnet,**
daß die Spatialfrequenz (f) für alle Reliefstrukturen gleich ist.

5. Strichkodefeld nach einem der Ansprüche 1 bis 4,
**dadurch gekennzeichnet,**
daß die Spatialfrequenz f zur Erhöhung der Ablesesicherheit bei einem nicht genau ebenen Träger (2) des Strichkodefelds eine Modulation mit einer vorbestimmten Spatialfrequenzamplitude A aufweist.

6. Strichkodefeld nach einem der Ansprüche 1 bis 5,
**dadurch gekennzeichnet,**
daß wenigstens eines der kodierten Zeichen des ersten Strichkodes ein zweiter Strichkode (28) überlagert ist, der aus beugungsoptisch wirksamen Strichflächen (29) und Neutralflächen (30) für die Darstellung einer das kodierte Zeichen kennzeichnenden Ziffer besteht und daß sich die Reliefstrukturen der Strichelemente (5,6) und der Flächen (29; 30) in wenigstens zwei Parametern der Reliefstrukturen unterscheiden.

7. Strichkodefeld nach Anspruch 6,
**dadurch gekennzeichnet,**
daß sich die Strichelemente (5,6) des ersten Strichkodes durch die Spatialfrequenz f als erstem Parameter und durch die Flächen (29; 30) des zweiten Strichkodes (28) sowie die Asymmetrie der Reliefstrukturen als zweitem Parameter unterscheiden.

8. Strichkodefeld nach einem der Ansprüche 1 bis 8,
**dadurch gekennzeichnet,**
daß in der Ableserichtung auf wenigstens der einen Längsseite (7) eine Seitenberandungsfläche (8) mit einer mikroskopischen Reliefstruktur angeordnet ist, die sich in wenigstens einem Parameter der Reliefstruktur von den Reliefstrukturen der Strichelemente (5; 6; 29; 30) unterscheidet, und daß die Seitenberandungsfläche (8) eine sich entlang der Längsseite (7) vorbestimmt ändernde Breite aufweist.

9. Strichkodefeld nach einem der Ansprüche 1 bis 8,
**dadurch gekennzeichnet,**
daß das Auslesen der Information in Reflexion erfolgt und daß die Reliefstruktur (12) ein nur für den Ausleselichtstrahl (10) transparentes Überzugmaterial aufweist, so daß die Strichelemente (5; 6; 29; 30) nicht visuell sichtbar sind.

10. Strichkodefeld nach Anspruch 9,
**dadurch gekennzeichnet,**
daß eine visuell sichtbare Markierung zum Lokalisieren der Strichelemente (5; 6; 29; 30) auf das Überzugmaterial aufgedruckt ist.

11. Strichkodefeld nach Anspruch 2,
**dadurch gekennzeichnet,**
daß wenigstens die einen der Strichelemente (5; 6; 29; 30) eine Mattstruktur aufweisen, deren Gitterkonstante von Ort zu Ort statistisch variiert.

12. Strichkodefeld nach einem der Ansprüche 1 bis 11,
**dadurch gekennzeichnet,**
daß ein Träger des Strichkodefeldes (1) als Selbstklebe-Etikett ausgebildet ist.

13. Strichkodefeld nach einem der Ansprüche 1 bis 12,
**dadurch gekennzeichnet,**
daß ein Wertdokument wenigstens ein Strichkodefeld (1) an einer vorbestimmten Stelle aufweist, das Informationen zur Klassifizierung des Wertdokumentes (3) enthält.

14. Einrichtung zum Auslesen eines Strichkodefeldes nach einem der vorhergehenden Ansprüche,
**dadurch gekennzeichnet,**
daß ein Ausleselichtstrahl (10) und mindestens ein Photosensor (18, 24) in wenigstens einer Ausleseebene (19, 20) unter einem durch die abzulesende Reliefstruktur (12) vorbestimmten Beugungswinkel ϑ angeordnet sind, so daß von den nacheinander mittels des Ausleselichtstrahles (10) beleuchteten Strichelementen (5; 6; 29; 30) unter dem Beugungswinkel ϑ gebeugtes Licht (14, 24) in den Akzeptanzwinkel des Photosensors (18, 25; 31) fällt und ein Ausgangssignal erzeugt.

15. Einrichtung nach Anspruch 14,
**dadurch gekennzeichnet,**
daß der Photosensor (18, 25, 31) ein optisches Mittel (21) zur Vergrößerung seines Akzeptanzwinkels für das gebeugte Licht (14, 24) aufweist.

16. Einrichtung nach Anspruch 14 oder 15,
**dadurch gekennzeichnet,**
daß wenigstens ein Paar von Photosensoren (18, 25) symmetrisch zum Ausleselichtstrahl (10) in wenigstens einer Ausleseebene (19, 20) angeordnet sind und zum Messen der Intensitätsdifferenz des beidseits des Ausleselichtstrahls unter dem gleichen Beugungswinkel ϑ gebeugten Lichts (14, 24) eingerichtet sind.

17. Einrichtung nach einem der Ansprüche 14 bis 16,
**dadurch gekennzeichnet,**
daß ein Leser einen rotationssymmetrischen Aufbau aufweist, daß mindestens zwei Photosensoren (18) auf einer Achse (22) hintereinander angeordnet sind, daß der Ausleselichtstrahl (10) die Achse (22) enthält und daß optische Mittel (21) derart angeordnet sind, daß gebeugtes Licht (14) im Leser unabhängig vom Azimutwinkel (φ) empfangen und entsprechend dem Beugungswinkel (ϑ,ß) auf einen der Photosensoren (18) fokussiert wird.

18. Verwendung des Strichkodefelds (1) nach einem der Ansprüche 1 bis 13 auf einem Wertdokument,
**dadurch gekennzeichnet,**
daß eine Information über das Wertdokument aus dem Strichkodefeld (1) maschinell ablesbar ist.

## Claims

1. A bar code field with bar elements (5) and background elements (6) of different widths B, which represent machine-readable encoded information, for reading out by means of a reading-out light beam (10) whose dimension in the reading direction is less than the smallest width B, characterised in that at least the bar elements (5) have an embossed optically effective microscopic periodic relief structure with the same azimuth angle φ₁ and the same orientation in each bar element (5) with a spatial frequency f of more than 10 lines per mm.

2. A bar code field according to claim 1 characterised in that the background elements have an optically effective microscopic relief structure and all relief structures of the background elements (6) have an identical second azimuth angle (φ₂) which is less than the first azimuth angle (φ₁) by a predetermined angular amount (δ).

3. A bar code field according to claim 1 or claim 2 characterised in that the relief structures of the bar elements (5) and the background elements (6) differ by an asymmetry in the relief profile.

4. A bar code field according to one of the preceding claims characterised in that the spatial frequency (f) is the same for all relief structures.

5. A bar code field according to one of claims 1 to 4 characterised in that to enhance the read-out reliability in relation to a support (2) of the bar code field, which support is not precisely flat, the spatial frequency f has a modulation with a predetermined spatial frequency amplitude A.

6. A bar code field according to one of claims 1 to 5 characterised in that superimposed on at least one of the coded characters of the first bar code is a second bar code (28) which comprises bar surfaces (29) with an optical-diffraction effect and neutral surfaces (30) for the representation of a digit characterising the encoded character and that the relief structures of the bar elements (5, 6) and the surfaces (29; 30) differ in at least two parameters of the relief structures.

7. A bar code field according to claim 6 characterised in that the bar elements (5, 6) of the first bar code differ by the spatial frequency f as the first parameter and by the surfaces (29; 30) of the second bar code (28) and the asymmetry of the relief structures as the second parameter.

8. A bar code field according to one of claims 1 to 8 characterised in that arranged in the read-out direction on at least the one longitudinal side (7) is a lateral border surface (8) with a microscopic relief structure which differs in at least one parameter of the relief structure from the relief structures of the bar elements (5; 6; 29; 30) and that the lateral border surface (8) is of a width which varies predeterminedly along the longitudinal side (7).

9. A bar code field according to one of claims 1 to 8 characterised in that reading-out of the information is effected in a reflection mode and that the relief structure (12) has a coating material which is transparent only for the reading-out light beam (10) so that the bar elements (5; 6; 29; 30) are not visually visible.

10. A bar code field according to claim 9 characterised in that a visually visible marking is printed onto the coating material for locating the bar elements (5; 6; 29; 30).

11. A bar code field according to claim 2 characterised in that at least some of the bar elements (5; 6; 29; 30) have a matt structure whose grating constant varies statistically from one location to another.

12. A bar code field according to one of claims 1 to 11 characterised in that a support for the bar code field (1) is in the form of a self-adhesive label.

13. A bar code field according to one of claims 1 to 12 characterised in that a value document has at least one bar code field (1) at a predetermined location, said field containing items of information for classification of the value document (3).

14. Apparatus for reading out a bar code field according to one of the preceding claims characterised in that a reading-out light beam (10) and at least one photosensor (18, 24) are arranged in at least one reading-out plane (19, 20) at a diffraction angle ϑ which is predetermined by the relief structure (12) to be read out so that light (14, 24) which is diffracted at the diffraction angle ϑ by the bar elements (5; 6; 29; 30) which are illuminated successively by means of the reading-out light beam (10) falls into the acceptance angle of the photosensor (18, 25; 31) and produces an output signal.

15. Apparatus according to claim 14 characterised in that the photosensor (18, 25, 31) has an optical means (21) for enlarging its acceptance angle for the diffracted light (14, 24).

16. Apparatus according to claim 14 or claim 15 characterised in that at least one pair of photosensors (18, 25) are arranged symmetrically relative to the reading-out light beam (10) in at least one reading-out plane (19, 20) and are designed to measure the difference in intensity of the light (14, 24) which is diffracted on both sides of the reading-out light beam at the same diffraction angle ϑ.

17. Apparatus according to one of claims 14 to 16 characterised in that a reader is of a rotationally symmetrical construction, that at least two photosensors (18) are arranged one after the other on an axis (22), that the reading-out light beam (10) includes the axis (22) and that optical means (21) are arranged in such a way that diffracted light (14) is received in the reader independently of the azimuth angle (φ) and focused in accordance with the diffraction angle (ϑ,β) onto one of the photosensors (18).

18. Use of the bar code field (1) according to one of claims 1 to 13 on a value document characterised in that an item of information about the value document can be read by machine out of the bar code field (1).

## Revendications

1. Champ de code à barres comportant des éléments en forme de barres (5) et des éléments de fond (6) possédant une largeur variable B, qui représentent une information codée lisible en machine, pour la lecture à l'aide d'un faisceau de lumière de lecture (10), dont la dimension dans la direction de lecture est inférieure à la largeur B la plus faible,
caractérisé par le fait qu'au moins les éléments en forme de barres (5) possèdent une structure en relief périodique microscopique formée par gaufrage, qui est active optiquement et possède le même angle azimutal φ₁ et la même orientation dans chaque élément en forme de barre (5) pour une fréquence spatiale f supérieure à 10 traits par mm.

2. Champ de code à barres selon la revendication 1, caractérisé par le fait que les éléments de fond possèdent une structure en relief microscopique, active du point de vue optique et que toutes les structures en relief des éléments de fond (6) possèdent un second angle azimutal (φ₂), qui diffère, d'une valeur angulaire prédéterminée (δ), du premier angle azimutal (φ₁).

3. Champ de code à barres selon la revendication 1 ou 2, caractérisé par le fait que les structures en relief des éléments en forme de barres (5) et des éléments de fond (6) diffèrent par une dissymétrie du profil en relief.

4. Champ de code à barres selon l'une des revendications précédentes, caractérisé par le fait que la fréquence spatiale (f) est la même pour toutes les structures en relief.

5. Champ de code à barres selon l'une des revendications 1 à 4, caractérisé par le fait que la fréquence spatiale f possède, pour accroître la sécurité de lecture dans le cas d'un support non exactement plat (2) du champ de code à barres, une modulation avec une amplitude déterminée A de la fréquence spatiale.

6. Champ de code à barres selon l'une des revendications 1 à 5, caractérisé par le fait qu'à au moins l'un des signes codés du premier code à barres est superposé un second code à barres (28), qui est constitué par des surfaces de barres (19), actives en produisant une diffraction optique, et les surfaces neutres (30) pour la représentation d'un chiffre, qui caractérise le signe codé, et que les structures en relief des éléments en forme de barres (5,6) et des surfaces (29,30) diffèrent en ce qui concerne au moins deux paramètres des structures en relief.

7. Champ de code à barres selon la revendication 6, caractérisé en ce que les éléments en forme de barres (5,6) du premier code à barres diffèrent du point de vue de la fréquence spatiale f en tant que premier paramètre et du point de vue des surfaces (29;30) du second code à barres (28) ainsi que du point de vue de la dissymétrie des structures en relief en tant que second paramètre.

8. Champ de code à barres selon l'une des revendications 1 à 7, caractérisé en ce que dans le sens de la lecture sur au moins l'un des grands côtés (7) est disposée une surface de bordure latérale (8) possédant une structure en relief microscopique, qui diffère des structures en relief des éléments en forme de barres (5;6;29;30), au moins pour ce qui concerne un paramètre de la structure en relief, et que la surface de bordure latérale (8) possède une largeur qui varie d'une manière prédéterminée le long du grand côté (7).

9. Champ de code à barres selon l'une des revendications 1 à 8, caractérisé en ce que la lecture de l'information s'effectue par réflexion et que la structure en relief (12) possède un matériau de recouvrement qui est transparent uniquement pour le faisceau de lumière de lecture (10), de sorte que les éléments en forme de barres (5;6;29;30) ne sont pas visibles optiquement.

10. Champ de code à barres selon la revendication 9, caractérisé par le fait qu'une marque visible du point de vue optique pour la localisation des éléments en forme de barres (5;6;29;30) est imprimée sur le matériau de revêtement.

11. Champ de code à barres selon la revendication 2, caractérisé en ce qu'au moins des premiers éléments en forme de barres (5;6;29;30) possèdent une structure mate, dont le pas de répartition varie de façon statistique d'un emplacement à un autre.

12. Champ de code à barres selon l'une des revendications 1 à 11, caractérisé en ce qu'un support du champ de code à barres (1) est réalisé sous la forme d'une étiquette autoadhésive.

13. Champ de code à barres selon l'une des revendications 1 à 12, caractérisé en ce qu'un document de valeur possède en un emplacement prédéterminé au moins un champ de code à barres (1), qui contient des informations pour le classement du document de valeur (3).

14. Dispositif pour lire un champ de code à barres selon l'une des revendications précédentes, caractérisé en ce qu'un faisceau de lumière de lecture (10) et au moins un photodétecteur (18,24) sont disposés dans au moins un plan de lecture (19,20) sous un angle de diffraction ϑ prédéterminé par la structure en relief (12) devant être lue, de sorte que la lumière (14,24) diffractée suivant un angle de diffraction ϑ par les éléments en forme de barres (5;6;29;30) éclairées successivement par le faisceau de lumière de lecture (10) arrive dans l'angle de réception du photodétecteur (18,25;31) et produit un signal de sortie.

15. Dispositif suivant la revendication 14, caractérisé par le fait que le photodétecteur (18, 25,31) comporte des moyens optiques (21) pour accroître son angle de réception pour la lumière diffractée (14,24).

16. Dispositif suivant la revendication 14 ou 15, caractérisé par le fait qu'au moins un couple de photodétecteurs (18,25) sont disposés de façon symétrique par rapport au faisceau de lumière de lecture (10) dans au moins un plan de lecture (19,20), et sont orientés de manière à mesurer la différence d'intensité de la lumière (14,24) diffractée sous le même angle de diffraction (ϑ) des deux côtés du faisceau de lumière de lecture.

17. Dispositif selon l'une des revendications 14 à 16, caractérisé en ce qu'un lecteur possède une structure à symétrie de révolution, qu'au moins deux photodétecteurs (10,11) sont disposés l'un derrière l'autre sur un axe (22), que le faisceau de lumière de lecture (10) contient l'axe (22) et que des moyens optiques (21) sont disposés de telle sorte qu'une lumière diffractée (14) est reçue dans le lecteur indépendamment de l'angle azimutal (φ) et est focalisée en fonction de l'angle de diffraction (ϑ,β) sur l'un des photodétecteurs (18).

18. Utilisation du champ de code à barres (1) selon l'une des revendications 1 à 13 sur un document de valeur, caractérisée en ce qu'une information concernant le document de valeur peut être lue mécaniquement à partir du champ de code à barres (1).
